# EUROPEAN PATENT SPECIFICATION

(11) **EP 0 583 822 B1**
(45) Date of publication and mention of the grant of the patent: **17.12.1997**
(21) Application number: 93202342.7
(22) Date of filing: 09.08.1993
(51) Int. Cl.: C23C 18/30, C23C 18/18

(54) **Method of manufacturing a black matrix of nickel on a passive plate of a liquid crystal display device in an electroless process**
Verfahren zur stromlosen Herstellung einer "Black Matrix" aus Nickel auf eine passive Platte einer Flüssigkristall-Wiedergabeanordnung
Procédé de fabrication par dépôt chimique d'une matrice noire en nickel sur une plaque passivée d'un dispositif de retransmission

(30) Priority: 12.08.1992 EP 92202486
(43) Date of publication of application: 23.02.1994
(73) Proprietor: Philips Electronics N.V., 5621 BA Eindhoven (NL)
(72) Inventor: van der Putten, Andreas Martinus Theodorus Paulus, NL-5656 AA Eindhoven (NL); Schrama, Johannes Thomas, NL-5656 AA Eindhoven (NL)
(74) Representative: Stolk, Steven Adolph

(56) References cited:
- WO-A-88/02412
- US-A- 4 634 468

## Description

The invention relates to a method of manufacturing a black matrix of nickel or a nickel alloy on a passive plate of a liquid crystal display device in an electroless process, in which method an activating layer comprising Pd particles is provided on a glass plate, after which colour filters are provided on the activating layer in accordance with a pattern and subsequently, in an electroless nickel bath, a nickel layer is applied to the activating layer between the colour filters, thereby forming the black matrix.

Such a method is used in the manufacture of liquid crystal display devices (LCD and LC-TV). In an LCD a liquid crystalline medium is sandwiched between two parallel glass support plates. Transparent electrodes, which generally consist of semiconductive metal oxide such as tin-doped indium oxide (ITO), are provided on the sides of the support plates facing the medium. In the case of a liquid crystal television screen (LC-TV), the first support plate is the active plate on which the pixels and the associated switching elements, such as diode switches, TFTs (Thin Film Transistors) and MIM switches (Metal Insulator Metal) are present. The second support plate forms the passive plate and comprises patterned colour filters in the colours blue, green and red, said colour filters being arranged opposite the pixels of the active plate. The dimensions of the pixels are, for example, 50 x 70 µm. The colour filters are provided by means of screen printing, offset printing, ink-jet printing or conventional lithographic techniques. In order to improve the contrast between the colour filters, a light-absorbing grating, the so-called "black matrix", is provided between the colour filters. A thin sputtered chromium film in which apertures for the colour filters are etched photolithographically can be used as the grating. A nickel pattern which is provided in an electroless process is an advantageous alternative to said chromium film, in particular for displays having large dimensions in which sputtering and lithography using photoresists involve intricate processes. Electroless or chemical metallization is a simple and inexpensive method of metallizing dielectric substrates, such as glass and synthetic resins. For this purpose, electroless metallization baths, such as copper and nickel baths, are used which comprise complexed metal ions and a reducing agent. On catalytic surfaces, the metal ions are reduced to metal by the reducing agent. Frequently, metallic Pd nuclei are provided on the surface to be metallized in order to render said surface catalytic. In a standard procedure the substrate to be metallized is nucleated (termed activation) beforehand by bringing the substrate into contact with either aqueous solutions of, in succession, SnCl₂ and PdCl₂ or with a colloidal SnPd dispersion. As a result, metallic Pd nuclei are formed on the surface to be metallized in an electroless process. Subsequently, the activated surface is immersed in an electroless metallization bath, causing the surface to be metallized.

Such a method is known from European Patent Application EP-A-392235. In accordance with said Application, a glass plate is provided with a 0.2 µm thick cured polymer layer on the basis of a curable coating mixture consisting of water, a polymer such as polyvinyl alcohol (PVA) and a photo or thermal initiator such as ammonium dichromate. The coating mixture also contains PdCl₂ which is reduced with an excess of SnCl₂, thereby forming colloidal metallic Pd which serves as a catalyst for the electroless metallization process. The colloidal Pd solution is stable due to the adsorption of Sn⁴⁺ ions at the Pd particles. After the polymer layer has been cured by subjecting it to heat or radiation, one of the above techniques is used to provide the blue, green and red colour filters on the cured polymer layer in accordance with a pattern. Subsequently, the thus treated glass plate is immersed in a superalkaline electroless nickel bath consisting of an aqueous solution of nickel sulphate, ammonium hydroxide, sodium hypophosphite and 2 mol/l of NaOH. In this process a metal layer consisting of nickel and phosphor which originates from the reduction agent is formed between the colour filters. Said NiP layer forms the black matrix. This method is self-aligned, *i.e*. the colour filters serve as a mask for the nickel layer to be applied.

A disadvantage of the known method is the low level of catalytic activity of the Pd particles formed for the electroless nickel-plating process. The colloidal metallic Pd which consists of metallic Pd with adsorbed Sn⁴⁺ ions, and which is formed by reducing PdCl₂ with SnCl₂, is a good activator for electroless copper baths in which the strongly reductive formaldehyde is used as the reducing agent. However, said activating methods are unsuitable for most electroless nickel baths because of the lower reactivity of the reducing agents, such as hypophosphite, used in these baths and because of the lower pH value. This is caused by the use of Sn²⁺ ions in the preparation of the Pd sol. Said Sn⁴⁺ ions are used per se as stabilizers in electroless nickel baths and inhibit oxidation of the reducing agent. In order to attain nickel deposition, very reactive nickel baths without stabilizers must be used, such as the superalkaline electroless metal bath on the basis of hypophosphite (pH > 14) referred to in EP-A-392235. The absence of stabilizers in an electroless nickel bath, however, leads to a poor process control, poor selectivity and the risk of instability of the bath, *i.e*. spontaneous nickel formation in the nickel bath. For this reason, commercially available electroless nickel baths comprise stabilizers, *inter alia* heavy metal ions such as Sn²⁺, Sn⁴⁺ and Pb²⁺, and organic sulphur compounds such as thioureum.

A further disadvantage of the known method is the generation of gas inside the PVA dichromate layer when reactive electroless nickel baths are used. Consequently, the layer bulges and becomes detached from the substrate.

It is an object of the invention to provide, *inter alia*, a method of providing a black matrix of nickel on a passive plate of a liquid crystal display device (LCD and LC-TV) in an electroless process, in which method all commercially available electroless nickel baths can be used and in which, in addition, no curable coating mixture comprising a photo or thermal initiator must be used as the activating layer.

These objects are achieved by a method as described in the opening paragraph, which is characterized in that the activating layer comprises a silane layer which is activated with an aqueous Pd sol which is stabilized with a water-soluble polymer. In this connection, said sol is to be understood to mean a colloidal dispersion of Pd in water. The method is based on the observation that Pd particles which are stabilized with water-soluble polymers do not adsorb at glass surfaces (for example SiO₂, quartz and quartz glass), whereas on materials other than glass an excellent Pd coating is obtained. Even if monolayers of another material are applied to modify the glass surface, the adsorption properties of the Pd nuclei may be influenced. A glass surface can very suitably be modified by means of various silanes which form a chemical bond with the glass surface. By means of said method a very high density of Pd nuclei of 2.10¹⁵ Pd atoms per cm² is obtained, which leads to a very good initiation of not only reactive superalkaline electroless baths without stabilizers but also of all less reactive commercially available electroless nickel baths having stabilizers. The high density of Pd nuclei also brings about a very satisfactory adhesion of the deposited nickel layer. Said Pd sol can be prepared by adding a reducing agent other than a Sn²⁺ salt, such as H₃PO₂ and dimethyl aminoborane, to an aqueous solution of a Pd salt, such as PdCl₂, Pd nitrate and Pd acetate, resulting in the formation of metallic Pd and said solution also comprising a water-soluble polymer which stabilizes the sol. Steric hindrance of the polymer chains on the Pd particles precludes flocculation of said particles. A stable sol cannot be obtained without such a polymer.

Suitable water-soluble polymers are polyvinyl alcohol (PVA) and polyvinyl pyrrolidone (PVP). When PVA is used a heterodisperse sol is obtained having particles ranging from 2-10 nm. When PVP is used a monodisperse sol is formed having particles of 2 nm, as established by TEM (Transmission Electron Microscopy). A particle of 2 nm contains approximately 500 Pd atoms. The molecular weight and the polymer concentration are chosen to be such that per Pd particle one polymer chain is adsorbed at said particle. Preferably, PVP having an average molecular weight of approximately 10,000 is used (for example K-15 obtainable from Fluka). A relatively low average molecular weight in combination with said small particles brings about a high density of not only Pd nuclei on the substrate, resulting in an excellent initiation of the electroless metallization, also electrodeless nickel metallization. Pd-PVP sols are more stable than Pd-PVA sols, so that the former sol has a longer life cycle. By virtue thereof a concentrated stock solution of a Pd-PVP sol can be prepared which is diluted, for example 10 x, before use. Another advantage of PVP relative to PVA is that the formation of foam in the nucleating solution is reduced.

Many silanes, for example the much used hexamethyl disilazane (HMDS), can suitably be used to modify the glass surface. Preferably, water-soluble silanes are used to avoid the use of detrimental organic solvents. Suitable silanes are water-soluble aminosilanes comprising at least one alkoxy group. Said silanes include those complying with the formula:

R³NH(CH₂)₃SiR¹ ₂(OR²)

where
R¹ = CH₃, C₂H₅, methoxy or ethoxy and
R² = CH₃ or C₂H₅
R³ = H, CH₃, C₂H₅ or (CH₂)ₘNHR⁴
R⁴ = H, CH₃ or C₂H₅ and
m = 1, 2 or 3.
Suitable representatives are 3-aminopropyl triethoxysilane ("A 1100") and N-(2-aminoethyl)-3-aminopropyl trimethoxysilane ("A 1120"). An example of a substance which can also suitably be used is 3-aminopropyl dimethylmethoxysilane. The concentration of the silane in water is not critical and ranges, for example, between 0.1 and 3% by weight. The silane layer can be provided on the glass plate by spin coating or by immersing the plate in a silane solution. The immersion time of the substrate in the silane solution is not critical either for the subsequent Pd adsorption. One of the alkoxy groups of the silane molecule reacts with a hydroxy group of the glass surface and causes chemical bonding. Of course, prior to silanation, the glass surface must be cleaned to a sufficient degree, the last cleaning step preferably being a UV-ozone treatment. After rinsing with water, the glass surface is coated with one or a few monolayers of silane, *i.e*. a silane layer having a thickness of 1-5 nm.

As stated above, the number of Pd atoms adsorbed at the glass surface amounts to 2.10¹⁵ per cm² if the method in accordance with the invention is used. If Pd-PVA sols are used a density of 3.10¹⁵ Pd atoms per cm² is attained. Said values are determined by means of XRF (X-ray fluorescence). Such a surface is very catalytic and leads to a reliable electroless metallization process, even if less reactive electroless nickel baths are used. All known electroless nickel baths can be used, such as those on the basis of glycine (pH = 3.8) succinate (pH = 4.5), pyrophosphate (pH = 10-11) and citrate (pH = 8-9). Use can also be made of the known commercially available baths, such as Shipley 65™ (pH = 4.9), OMI Enplate 426™ (pH = 6-7), Shipley Niposit 468™ (pH = 7.3), OMI Enlyte 512 (pH = 4.6) and 514™ (pH = 9.0). In addition to a nickel salt such a bath always comprises a reducing agent, such as hypophosphite or dimethyl aminoborane, and it usually comprises a stabilizer. Dependent upon the reducing agent used, the deposited nickel layers also comprise phosphor (P) or boron (B). Electroless nickel-cobalt baths can also suitably be used. In order to be used as black matrix, the deposited nickel must have a transmission < 1% (at a wavelength of 500 nm). All deposited nickel layers having a layer thickness > 0.1 µm meet this requirement.

After the nickel pattern is formed in accordance with the invention, an equalizing layer and an ITO layer are successively provided.

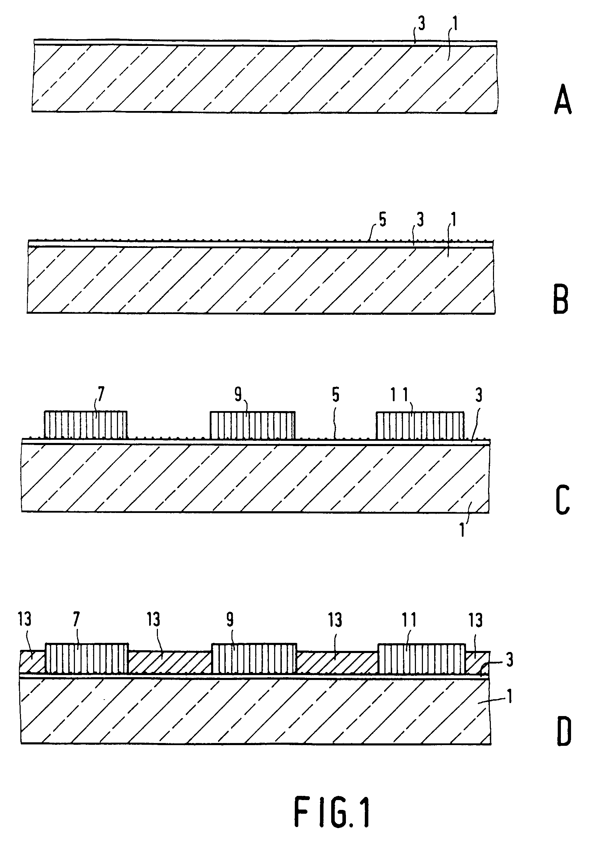

The invention will be explained in greater detail by means of exemplary embodiments and with reference to the accompanying drawing, in which Fig. 1 diagrammatically shows the process steps of the method in accordance with the invention.

It is remarked that in the International Patent Application WO 88/02412 organosilanes are disclosed in order to promote the adhesion between a substrate and catalytic species (e.g. tin-palladium) used in electroless metal depositing.

US patent no. 4,634,468 discloses a palladium catalyst for electroless metallization, which catalyst is suspended in water by a water soluble polymer, such as PVA or PVP.

### Exemplary embodiment 1.

A polymer-stabilized Pd sol which can suitably be used in the method in accordance with the invention is prepared as follows. A quantity of 0.6 ml of a PdCl₂ solution consisting of 10 g/l of PdCl₂ and 350 ml/l of concentrated hydrochloric acid in water is diluted with 38.4 ml of water. A quantity of 0.07 ml of a 1 wt.% polyvinyl pyrrolidone (PVP) solution in water is added to this solution. Said PVP is obtained from Fluka, type K-15, and has an average molecular weight of 10,000. Subsequently, 1 ml of a 0.625 molar H₃PO₂ solution is added while stirring. The Pd sol formed is monodisperse, having particles of 2 nm, and is used as an activating solution.

Fig. 1 diagrammatically shows the process steps of the method in accordance with the invention, the glass substrate and the silane layer and Pd nuclei to be provided being diagrammatically shown in cross-section.

A borosilicate glass plate 1 (Fig. 1A) having dimensions of 9 x 12 cm and a thickness of 1 mm is used as the substrate. The glass plate 1 is cleaned with an aqueous solution comprising 20 g/l of sodium gluconate, 25 g/l of sodium hydroxide and 3 g/l of Tensagex™ (wetting agent). After rinsing with demineralised water and drying, the glass plate is placed in a UV-ozone reactor (manufactured by Samco UV-1) for 5 minutes.

Subsequently, the cleaned glass plate is immersed in a 0.3 wt.% solution of 3-aminopropyl triethoxysilane (A0750 available from Petrarch) in water for 1 minute. By the reaction of ethoxy groups of said silane molecules with -SiOH groups of the glass surface a silane layer 3 (Fig. 1A) having a thickness of approximately 1-5 nm is formed on the glass surface. The silane used comprises three reactive ethoxy groups, so that the silane layer consists of a three-dimensional network (polysiloxane). If two ethoxy groups of said silane are substituted by methyl groups (A0735 available from Petrarch) a monolayer of said silane is formed on the glass surface. The modified glass plate is rinsed with demineralised water and dried.

Subsequently, the test substrate is immersed in the above-mentioned activating solution of PVP-stabilized Pd sol for 4 minutes, resulting in the formation of Pd nuclei 5 on the silane layer 3 (Fig. 1B). Surface analysis using TEM (Transmission Electron Microscopy) shows that the Pd nuclei have a diameter of 2 nm. XRF analysis shows a degree of coverage of 2.10¹⁵ adsorbed Pd atoms per cm². After the activating treatment the glass plate is rinsed in demineralised water and dried.

A customary method, as described in the above-mentioned EP-A-392235, is used to provide the activated surface with a colour filter pattern which consists of colour cells 7 (red), 9 (green) and 11 (blue) (Fig. 1C), which correspond to pixels.

Subsequently, the activated glass plate having said colour filter pattern is immersed in an electroless nickel bath for 3 minutes, said bath comprising 20 g of NiCl₂, 16 g of sodium succinate, 10 g of sodium hypophosphite and 2 g of sodium acetate per litre of water. The nickel bath is acidified with HCl to a pH-value of 4.5 and has a temperature of 70° C. Between the colour filters 7, 9, 11 there is deposited patterned nickel 13 (Fig. 1D) having a layer thickness of 0.2 µm. The nickel pattern forms the black matrix. After rinsing with demineralised water and drying, in succession, an equalizing layer is provided on the colour filter pattern and the black matrix, and subsequently ITO electrodes and an orientation layer (the last three layers are not shown) are provided.

### Exemplary embodiment 2.

Exemplary embodiment 1 is repeated using the commercially available electroless nickel bath Shipley 65™ (pH = 4.9). This bath contains hypophosphite as the reducing agent and, in addition, relatively large quantities of Pb²⁺ salts and organic sulphur compounds as stabilizers. At a temperature of the bath of 95° C a nickel layer having a thickness of 0.2 µm is deposited between the colour filters in 1 minute. The surface activated in accordance with the invention is sufficiently catalytic for the electroless deposition of nickel from baths having a relatively low pH value, which baths comprise stabilizers and the little reactive hypophosphite as the reducing agent.

### Comparative example

The exemplary embodiment described in the above-mentioned EP-A-392235 is repeated. A glass plate is provided with a coating mixture of gelatin, ammonium dichromate, hydrocloric acid and water. Said mixture also contains colloidal Pd obtained by reducing PdCl₂ with SnCl₂. After curing with UV light the layer thickness of the coating is 0.2 µm. Subsequently, the colour filter pattern is photolithographically provided. Instead of the electroless nickel bath without stabilizers described in EP-A-392235, use is made of the electroless nickel bath Shipley 65™ which contains stabilizers. In this case no nickel deposition takes place.

The method in accordance with the invention makes it possible to manufacture a black matrix of nickel for a passive plate for use in an LCD in an electroless process, in which method the colour filters serve as the mask for the electroless nickel-plating, and in which commercially available electroless nickel baths comprising stabilizers can be used and in which no curable coating mixture comprising a photo or thermal initiator need be used as the activating layer.

## Claims

1. A method of manufacturing a black matrix of nickel or a nickel alloy on a passive plate of a liquid crystal display device in an electroless process, in which method an activating layer comprising Pd particles is provided on a glass plate, after which colour filters are provided on the activating layer in accordance with a pattern and subsequently, in an electroless nickel bath, a nickel layer is applied to the activating layer between the colour filters, thereby forming the black matrix, characterized in that the activating layer comprises a silane layer which is activated with an aqueous Pd sol which is stabilized with a water-soluble polymer.

2. A method as claimed in Claim 1, characterized in that the Pd sol is stabilized with a polymer selected from the group formed by polyvinyl alcohol and polyvinyl pyrrolidone.

3. A method as claimed in Claim 1, characterized in that the silane layer is provided by means of a solution of an aminoalkoxysilane in water.

4. A method as claimed in Claim 3, characterized in that the silane is selected from the group formed by 3-aminopropyl triethoxysilane and N-(2-aminoethyl)-3-aminopropyl trimethoxysilane.

## Patentansprüche

1. Verfahren zur stromlosen Herstellung einer "Black Matrix" aus Nickel oder einer Nickellegierung auf einer passiven Platte einer Flüssigkristall-Wiedergabeanordnung, wobei auf einer Glasplatte eine Pd-Teilchen enthaltende Aktivierungsschicht angebracht wird, wonach auf der Aktivierungsschicht mustermäßig Farbfilter angebracht werden und danach in einem stromlosen Nickelbad auf der Aktivierungsschicht zwischen den Farbfiltern unter Bildung der "Black Matrix" eine Nickelschicht angebracht wird. dadurch gekennzeichnet, daß die Aktivierungsschicht eine Silanschicht umfaßt, die mit einem wässerigen Pd-Sol aktiviert wird, das mit einem wasserlöslichen Polymer stabilisiert wird.

2. Verfahren nach Anspruch 1, dadurch gekennzeichnet, daß das Pd-Sol mit einem Polymer, gewählt aus der Gruppe, gebildet durch Polyvinylalkohol und Polyvinylpyrrolidon, stabilisiert wird.

3. Verfahren nach Anspruch 1, dadurch gekennzeichnet, daß die Silanschicht mittels einer Lösung eines Aminoalkoxysilans in Wasser angebracht wird.

4. Verfahren nach Anspruch 3, dadurch gekennzeichnet, daß das Silan gewählt wird aus der Gruppe, gebildet durch 3-Aminopropyltriäthoxysilan und N-(2-Aminoäthyl)-3 -Aminopropyltrimethoxysilan.

## Revendications

1. Procédé pour fabriquer dans un processus sans courant une matrice noire constituée de nickel ou d'un alliage de nickel sur une plaque passive d'un dispositif d'affichage à cristaux liquides, procédé suivant lequel une couche d'activation comportant des particules de Pd est déposée sur une plaque en verre, après quoi des filtres colorés sont disposés sur la couche d'activation en conformité avec une configuration et subséquemment, dans un bain de nickel sans courant, une couche constituée de nickel est déposée sur la couche d'activation entre les filtres colorés, de ce fait constituant la matrice noire, caractérisé en ce que la couche d'activation comporte une couche constituée de silane qui est activée par un sol de Pd aqueux étant stabilisé par un polymère soluble dans l'eau.

2. Procédé selon la revendication 1, caractérisé en ce que le sol de Pd est stabilisé par un polymère choisi parmi le groupe formé par de l'alcool polyvinylique et par de la pyrrolidone polyvinylique.

3. Procédé selon la revendication 1, caractérisé en ce que la couche constituée de silane est déposée au moyen d'une solution constituée d'un aminoalcoxysilane dans l'eau.

4. Procédé selon la revendication 3, caractérisé en ce que le silane est choisi parmi le groupe formé par du 3-aminopropyletriéthoxysilane et du N-(2-aminoéthyle)-3-aminopropyletriméthoxysilane.
